# EUROPÄISCHE PATENTANMELDUNG

(11) **EP 4 609 684 A1**
(43) Veröffentlichungstag der Anmeldung: **03.09.2025**
(21) Anmeldenummer: 25159981.7
(22) Anmeldetag: 25.02.2025
(51) Int. Cl.: A01B 63/00, A01B 73/04

(54) **LANDWIRTSCHAFTLICHE ARBEITSMASCHINE**

(30) Priorität: 01.03.2024 DE 102024106067
(71) Anmelder: Lemken GmbH & Co KG, 46519 Alpen (DE)
(72) Erfinder: Geraats, Marcel, 41334 Nettetal (DE); Paeßens, Christian, 47661 Issum (DE)

(57) **Zusammenfassung**

Es wird eine landwirtschaftliche Arbeitsmaschine (1), insbesondere zur Bodenbearbeitung und/oder Materialausbringung, mit einem Rahmen (2) und mit einem ersten Werkzeugabschnitt (3) sowie mit einem zweiten Werkzeugabschnitt (4) vorgeschlagen, wobei der erste Werkzeugabschnitt (3) und der zweite Werkzeugabschnitt (4) jeweils schwenkbare Segmente (5, 6, 7, 8) aufweisen,
wobei die Segmente (5, 6, 7, 8) schwenkbar um eine jeweils gemeinsame Schwenkachse (10, 11,) am Rahmen (2) angeordnet sind,
und die Segmente (5, 7) des ersten Werkzeugabschnittes (3) relativ zu den Segmenten (6, 8) des zweiten Werkzeugabschnittes (4) höhenbeweglich angeordnet sind. Dabei weisen die Werkzeugabschnitte verschiedene Segmentzahlen und/ oder Teilarbeitsbreiten auf.

## Beschreibung

Die Erfindung betrifft eine landwirtschaftliche Arbeitsmaschine gemäß dem Oberbegriff des Patentanspruches 1.

Landwirtschaftliche Arbeitsgeräte weisen große Arbeitsbreiten auf, welche die zulässigen Transportbreiten im Straßenverkehr übersteigen. Zu diesem Zweck sind die Geräte mit einklappbaren Rahmenabschnitten versehen. Das Patent EP843957B1 zeigt in Figur 1 eine Bestellkombination, deren Arbeitswerkzeuge an einer Seite in Arbeitsstellung und an der gegenüberliegenden Seite in Transportstellung verschwenkt sind. Ein weiteres, klappbares Bodenbearbeitungsgerät mit verschiedenen Werkzeugabschnitten ist in DE202011107536U1 dargestellt. Dabei sind die meist in Längsrichtung des Arbeitsgerätes angeordneten Werkzeugabschnitte über gemeinsame Rahmensegmente von einer Arbeits- in eine Transportstellung und umgekehrt verschwenkbar angeordnet. Eine Variation verschiedener Werkzeugabschnitte mit unterschiedlichen Teilsegmentbreiten ist nicht vorgesehen.

Aufgabe der Erfindung ist es, eine landwirtschaftliche Arbeitsmaschine bereit zu stellen, welche Werkzeugabschnitte verschiedener Teilarbeitsbreiten miteinander kombiniert und welche zueinander beweglich angeordnet sind. Weiterhin können diese von einer gesamten Arbeitsbreite in eine im Straßenverkehr zulässigen Arbeitsbreite verschwenkt werden.

Diese Aufgabe wird durch die Merkmale des kennzeichnenden Teiles des Anspruches 1 gelöst.

Hierzu weist die landwirtschaftliche Arbeitsmaschine, insbesondere eine Arbeitsmaschine zur Bodenbearbeitung und/oder Materialausbringung, einen Rahmen und einen ersten Werkzeugabschnitt sowie einen zweiten Werkzeugabschnitt auf. Dabei weisen der erste Werkzeugabschnitt und der zweite Werkzeugabschnitt jeweils schwenkbare Segmente auf, welche schwenkbar um eine jeweils gemeinsame Schwenkachse am Rahmen angeordnet sind. Hierdurch erfolgt eine flexible Bodenanpassung der Werkzeugabschnitte an Bodenunebenheiten, wie sie auf einem Acker im Betrieb der landwirtschaftlichen Arbeitsmaschine auftreten. Dabei sind die Segmente des ersten Werkzeugabschnittes relativ zu den Segmenten des zweiten Werkzeugabschnittes höhenbeweglich angeordnet. Hierdurch kann die Arbeitstiefe der Werkzeuge, insbesondere von Bodenbearbeitungswerkzeugen, des ersten Werkzeugabschnittes flexibel in Bezug zur Position der Werkzeuge des zweiten Werkzeugabschnittes und/oder der Bodenoberfläche des zu bearbeitenden Ackers eingestellt werden.

In einer weiteren Ausführungsform der landwirtschaftlichen Arbeitsmaschine weisen die Segmente des ersten Werkzeugabschnittes eine zu den Segmenten des zweiten Werkzeugabschnittes verschiedene Segmentarbeitsbreiten auf. Abhängig von der Werkzeugart des jeweiligen Werkzeugabschnittes können sich verschiedene Werkzeugkonfigurationsbreiten ergeben, welche diese Ausführungsform vorteilhaft begegnet.

Ergänzend weisen die Segmente des ersten Werkzeugabschnittes und die Segmente des zweiten Werkzeugabschnittes eine gemeinsame Gesamtarbeitsbreite auf, welche bevorzugt die Gesamtarbeitsbreite der landwirtschaftlichen Maschine bildet. Somit wird in einer Fahrspur der landwirtschaftlichen Arbeitsmaschine stets ein gleicher Arbeitsstreifen des Ackers bearbeitet, während sich die einzelnen Segmentarbeitsbreiten der Segmente verschiedener Werkzeugabschnitte innerhalb der Gesamtarbeitsbreite überlappen. Auch bei ungünstigen Schwenkpositionen der einzelnen Segmente zueinander werden dennoch unbearbeitete Zwischenräume, welche die Werkzeuge benachbarter Segmente eines Werkzeugabschnittes hinterlassen, zumindest teilweise durch die überlappende Anordnung der Segmente eines weiteren Werkzeugabschnittes bearbeitet oder überfahren.

In einer verbesserten Ausführungsform der landwirtschaftlichen Arbeitsmaschine weist der erste Werkzeugabschnitt oder der zweite Werkzeugabschnitt ein zumindest weiteres Segment auf, wobei sich die Gesamtzahl der Segmente des ersten Werkzeugabschnittes und des zweiten Werkzeugabschnittes um zumindest ein Segment unterscheiden. Hierdurch kann beispielsweise ein Segment fest dem Rahmen der landwirtschaftlichen Arbeitsmaschine zugeordnet werden, während weitere Segmente schwenkbar zu diesem angeordnet sind. Auch hier bilden die einzelnen Segmente der jeweiligen Werkzeugabschnitte in Arbeitsstellung der landwirtschaftlichen Arbeitsmaschine deren gesamte Arbeitsbreite und überlappen einander.

In einer besonderen Ausführungsform der landwirtschaftlichen Arbeitsmaschine weist zumindest ein Werkzeugabschnitt in Arbeitsstellung zueinander höhenverstellbare Segmente auf. Somit wird unabhängig von der gemeinsamen Schwenkbewegung der Segmente der verschiedenen Werkzeugabschnitte eine weitere, verbesserte Bodenanpassung oder Arbeitstiefeneinstellung der Werkzeuge innerhalb der Gesamtarbeitsbreite eines einzelnen Werkzeugabschnittes erreicht
Zum Erreichen einer zulässigen Transportbreite der landwirtschaftlichen Arbeitsmaschine im Straßenverkehr sind die Segmente des ersten Werkzeugabschnittes und die Segmente des zweiten Werkzeugabschnittes von einer horizontalen Arbeitsstellung in eine vertikale Transportstellung und umgekehrt verschwenkbar angeordnet. Dabei beträgt der Schwenkwinkel zwischen den Stellungen zumindest 90 Grad. Bevorzugt können die Segmente der Werkzeugabschnitte um einen Schwenkwinkel, welcher 90 Grad übersteigt, weiter bevorzugt um einen Schwenkwinkel von bis zu 110 Grad von der vertikalen Transportstellung in die Arbeitsstellung verschwenkt werden. Durch diese überstreckte Arbeitsstellung erfolgt weiterhin eine verbesserte Bodenanpassung insbesondere in kupierten Geländeformen, welche ein Acker aufweist.

In einer besonderen Ausführungsform der landwirtschaftlichen Arbeitsmaschine erstreckt sich die Segmentarbeitsbreite der Segmente zumindest einer der Werkzeugabschnitte beidseitig einer Schwenkachse der jeweiligen Segmente. Insbesondere bei Anordnung der Werkzeuge eines Werkzeugabschnittes unterhalb des Rahmens der landwirtschaftlichen Arbeitsmaschine wird die Bearbeitung der gesamten Arbeitsbreite des entsprechenden Werkzeugabschnittes gewährleistet.

In einer weiter verbesserten Ausführungsform der landwirtschaftlichen Arbeitsmaschine sind die Schwenkachsen der Segmente am Rahmen oberhalb zumindest eines der Werkzeugabschnitte angeordnet. Insbesondere bei einer beidseitigen Erstreckung der Segmentarbeitsbreite eines Segmentes relativ zu einer Schwenkachse werden hierdurch Kollisionen der Segmente mit dem Rahmen der landwirtschaftlichen Arbeitsmaschine innerhalb der Schwenkbewegung vorteilhaft vermieden. Weiter vorteilhaft und umgekehrt erstreckt sich die Segmentarbeitsbreite eines anderen Segmentes eines weiteren Werkzeugabschnittes, bei welchem ein benachbartes Segment fest dem Rahmen der landwirtschaftlichen Arbeitsmaschine zugeordnet ist, lediglich einseitig und seitlich von einer Schwenkachse des Rahmens, um eine Kollision mit dem feststehenden Segment während der Schwenkbewegung des weiteren Werkzeugabschnittes zu vermeiden. Somit verschwenken die Segmente verschiedener Werkzeugabschnitte um eine gemeinsame Achse, während sich lediglich eine der Segmentarbeitsbreiten eines Segmentes einseitig und eine weitere Segmentarbeitsbreite eines weiteren Segmentes beidseitig und seitlich ihrer gemeinsamen Schwenkachse erstreckt.

In einer bevorzugten Ausbildung der landwirtschaftlichen Arbeitsmaschine ist einer der Werkzeugabschnitte als Fahrwerk ausgebildet, welches sich in Arbeitsstellung über die Gesamtarbeitsbreite der Arbeitsmaschine erstreckt. Dabei bildet zumindest ein Segment des Werkzeugabschnittes ein Transportfahrwerk. Die zumindest weiter außen angeordneten Segmente des Werkzeugabschnittes sind oberhalb des Segmentes, welches das Transportfahrwerk bildet, in Transportposition der Arbeitsmaschine angeordnet oder verschwenkt. Durch eine Höheneinstellung der Segmente, wie oben beschrieben, innerhalb des Werkzeugabschnittes, welcher das Fahrwerk bildet, kann zugleich die seitliche Erstreckung der in Transportstellung nach oben verschwenkten, weiteren Segmente weiter verringert werden, sollte diese eine zulässige Transportbreite der landwirtschaftliche Arbeitsmaschine überschreiten.

In einer erweiterten Ausbildung der landwirtschaftlichen Arbeitsmaschine weist diese einen weiteren, zumindest dritten Werkzeugabschnitt auf, welcher zueinander schwenkbare Segmente enthält. Dabei entspricht die Anzahl der Segmente des dritten Werkzeugabschnittes der Anzahl der Segmente zumindest eines weiteren Werkzeugabschnittes und weicht von der eines anderen Werkzeugabschnittes um zumindest ein Segment ab. Bevorzugt sind der dritte oder darüber hinaus weitere Werkzeugabschnitte vor oder hinter den beiden ersten und zweiten Werkzeugabschnitten angeordnet. Im Falle der vorderen Anordnung des dritten oder weiteren Werkzeugabschnittes empfehlen sich insbesondere Striegel-, Einebnungs-, Zerkleinerungs- oder Tiefenführungswerkzeuge oder Walzen als Vorwerkzeuge der landwirtschaftlichen Arbeitsmaschine. Im Falle einer heckseitigen Anordnung empfehlen sich insbesondere Ausbring-, Rückverfestigungs- und Einebnungswerkzeuge als nachlaufende Werkzeuge der landwirtschaftlichen Arbeitsmaschine. Insbesondere bei Anordnung von Ausbringwerkzeugen wie Sä- oder Düngeschare oder andere Verteilwerkzeuge an der landwirtschaftlichen Arbeitsmaschine weist diese einen Tankaufbau zur Materialausbringung auf. Bevorzugt ist dieser mittig auf dem Rahmen der landwirtschaftlichen Arbeitsmaschine angeordnet. Dabei ist der Tankaufbau in Transportstellung zumindest teilweise von Segmenten zumindest eines Werkzeugabschnittes umschlossen. Weiter bevorzugt sind die Schwenkachsen, um welche die Segmente des zumindest ersten und zweiten Werkzeugabschnittes verschwenken, außerhalb der Tankbreite am Rahmen der landwirtschaftlichen Arbeitsmaschine angeordnet.

Die Erfindung zeichnet sich insbesondere dadurch aus, dass eine landwirtschaftliche Maschine bereitgestellt wird, welche verschiedene Werkzeugabschnitte aufweist, welche wiederum in einzelne Segmente aufgeteilt sind. Dabei können die einzelnen Segmente relativ zum Rahmen der landwirtschaftlichen Maschine oder zueinander verschwenkt werden. Dies ermöglicht eine Winkelverstellung und zugleich eine flexible Anpassung der jeweiligen Werkzeugabschnitte an Bodenunebenheiten. Durch das gemeinsame Verschwenken von Segmenten, welche verschiedene Werkzeugabschnitte zugehören, wird zugleich eine kostengünstige Schwenkvorrichtung bereitgestellt, welche mit wenigen Aktoren betätigt werden kann. Die einzelnen Segmente verschiedener Werkzeugabschnitte sind dabei einem gemeinsamen Segmentrahmen zugeordnet, welcher um die gemeinsame Schwenkachse der Segmente relativ zum Rahmen schwenkbar angeordnet ist und durch zumindest einen Aktor, der zwischen dem Rahmen der landwirtschaftlichen Maschine und dem Segmentrahmen angeordnet ist.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 eine landwirtschaftliche Arbeitsmaschine in einer Perspektive,
Fig.2 die landwirtschaftliche Arbeitsmaschine in Arbeitsstellung in Draufsicht,
Fig.3 eine vereinfachte Darstellung aus Fig. 1,
Fig.4 die landwirtschaftliche Arbeitsmaschine in Seitenansicht,
Fig.5 die landwirtschaftliche Arbeitsmaschine in Transportstellung in Draufsicht und
Fig.6 eine vereinfachte Darstellung aus Fig. 5.

Bei den Darstellungen handelt es sich im Wesentlichen um konkrete Ausführungsbeispiele. Die Erfindung ist hingegen nicht auf die dargestellten Ausführungsbeispiele beschränkt, sondern kann auch in fachmännischer Weise abgewandelt werden, um sie an einen bestimmten Anwendungsfall anzupassen.

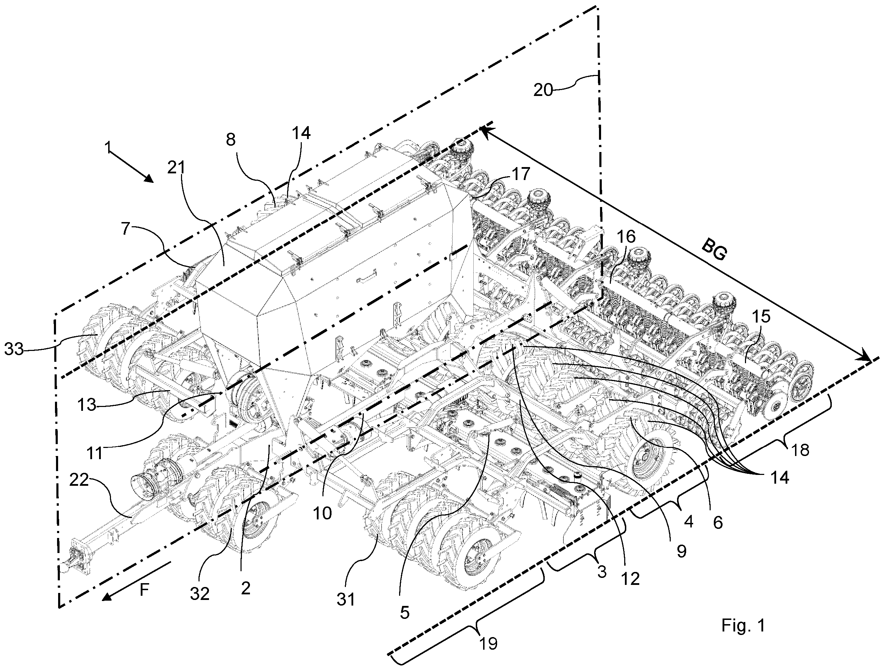

Figur 1 zeigt eine landwirtschaftliche Arbeitsmaschine 1 in Darstellung von schräg vorne gesehen. Die Arbeitsmaschine 1 ist vorliegend als Säkombination aufgebaut und besteht aus einem Rahmen 2, einer daran im vorderen Bereich als Zugdeichsel ausgebildeten Koppelvorrichtung 22, einem ersten Werkzeugabschnitt 3 sowie einem als Reifenpacker ausgebildeten Fahrwerk, welches zugleich einen zweiten Werkzeugabschnitt 4 bildet und im hinteren Bereich des Rahmens 2 angeordnet ist. Die Arbeitsmaschine ist im ausgeklappten Zustand, welcher die Arbeitsstellung definiert, dargestellt und erstreckt sich mit seinen Werkzeugabschnitten 3 und 4 seitlich zur Fahrtrichtung F über die gesamte Arbeitsbreite BG. Der Werkzeugabschnitt 3 ist in zwei Segmente 5, 7 geteilt, welche als angetriebene Kreiseleggen ausgeführt sind. Dem Werkzeugabschnitt 3 ist optional ein weiterer Werkzeugabschnitt 19 vorgelagert. Dieser ist als Tiefenführungseinrichtung mit den Segmenten 31, 32, 33 in Form von einzelnen Reifenwalzen dargestellt, wobei die äußeren Segmente 31, 33 den einzelnen Segmenten 5 und 7 sowie im mittleren Bereich das Segment 32 direkt dem Rahmen 2 höhenverstellbar zugeordnet sind. Alternativ oder zusätzlich kann der Werkzeugabschnitt 19 bzw. seine Segmente 31, 32, 33 auch mit Planier- und / oder Schneidwerkzeugen ausgestattet sein. Die zwischen dem mittleren Segment 32 und den äußeren Segmenten 31, 33 des Werkzeugabschnittes 19 verbleibt ein Freiraum, welcher sich über die Fahrspuren eines die Arbeitsmaschine 1 bewegendes, nicht dargestellten Zugfahrzeuges erstreckt. Dies ist über die Koppeleinrichtung 22 beweglich mit der Arbeitsmaschine 1 verbunden und dient zugleich als Energiequelle für hydraulische, mechanische und elektrische Antriebe, Aktoren, Getriebe und Steuerungen der Arbeitsmaschine 1. Das Fahrwerk besteht aus Achsnaben 29 und daran drehbar befestigten Rädern 14. Diese sind nebeneinander über die gesamte Arbeitsbreite BG und bevorzugt auch in Fahrtrichtung F zueinander versetzt angeordnet. Insgesamt bilden die Räder einen Reifenpacker des zweiten Werkzeugabschnittes 4 und zugleich das Fahrwerk der Arbeitsmaschine 1. Die Räder sind dem rechten und linken Segment 6, 8 sowie dem mittleren Segment 9 zugeordnet. Das mittlere Segment ist direkt mit dem Rahmen 2 verbunden und dient zugleich als Transportfahrwerk zur Straßenfahrt. Hinter dem zweiten Werkzeugabschnitt 4 ist ein weiterer Werkzeugabschnitt 18 mit höhenverstellbaren Segmenten 15, 16, 17 angeordnet. Diese sind mit weiteren Werkzeugen zur Rückverfestigung und / oder mit Scharen zur Ausbringung von Material wie Dünger und/ oder Saatgut auf oder in die Bodenoberfläche ausgestattet. Oberhalb des Rahmens 2 ist ein Tankaufbau 21 zur Mitführung von auszubringendem Material aufgebaut. Das gesamte Gewicht des Arbeitsgerätes 1 sowie des im Tankaufbau 21 mitgeführten Materials stützt sich zu einem kleinen Teil auf die Koppeleinrichtung 22 und das damit verbundene Zugfahrzeug sowie zu einem großen Teil auf die Räder 14 des Fahrwerkes im zweiten Werkzeugbereich 4 über die gesamte Arbeitsbreite BG bodenschonend ab. Um die beiden Schwenkachsen 10 und 11 können die äußeren Segmente 5,6,7,8 mittels des rechten und linken Segmentrahmens 13, 12 seitlich des Tankaufbaus 21 von der dargestellten Arbeitsposition in eine aufrechte Transportposition und umgekehrt geklappt oder verschwenkt werden. Alternativ zu einem gemeinsamen linken und rechten Segmentrahmen 12, 13 können diese auch entsprechend der Werkzeugabschnitte 3, 4, 18, 19 mehrteilig und unabhängig und einzeln zueinander schwenkbar ausgeführt werden.

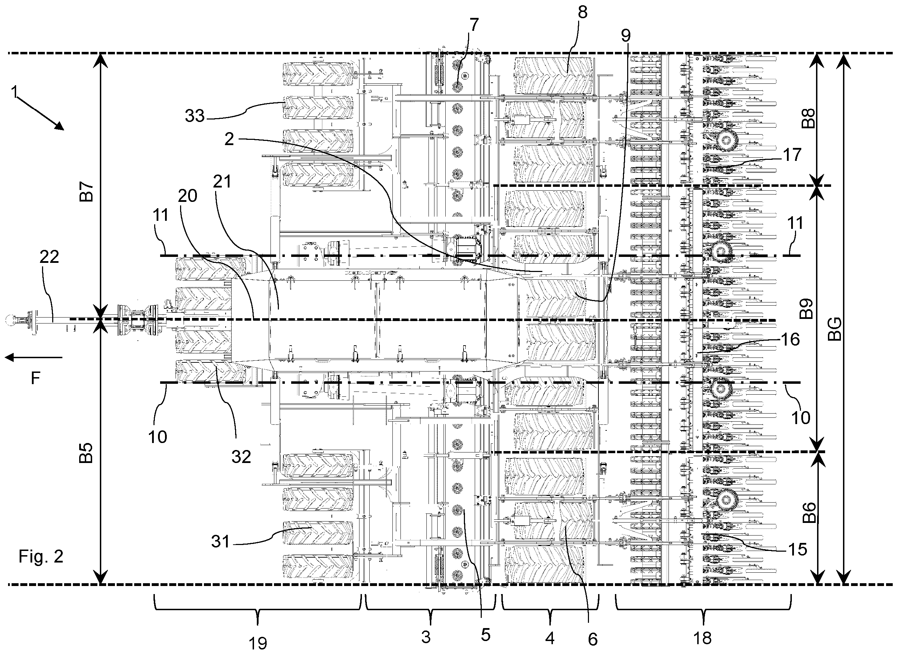

Figur 2 zeigt die Arbeitsmaschine 1 von oben gesehen. Analog zur vorherigen Darstellung ist hier insbesondere die unterschiedliche Aufteilung der einzelnen Werkzeugabschnitte 3, 4, 18 und 19 erkennbar. Der erste Werkzeugabschnitt 3 weist hier entsprechend seiner zwei Segmente 5 und 7 einzelne Segmentbreiten B5 und B7 auf, welche sich rechts und links der aufrechten Mittelebene der Arbeitsmaschine 1 erstrecken. Die als einzelne Kreiseleggen ausgebildeten Segmente 5 und 7 erstrecken sich dabei unterhalb des Rahmens 2 und werden durch den darüber angeordneten Tankaufbau 21 verdeckt. Abweichend von den vorderen Segmentarbeitsbreiten B5 und B7 des ersten Werkzeugabschnittes 3 unterscheiden sich die Segmentarbeitsbreiten B6, B8 und B9 der Segmente 6, 8, 9 des zweiten Werkzeugabschnittes 4. Insgesamt bilden alle Segmentbreiten B5 und B7 bzw. B6, B8 und B9 die gesamte Arbeitsbreite BG der landwirtschaftlichen Arbeitsmaschine 1. Auch die weiteren Werkzeugabschnitte 18, 19 weisen, wie dargestellt, mehrere Segmente 15, 16, 17 mit unterschiedlichen Segmentarbeitsbreiten auf, welche sich zumindest in Anzahl und/oder Segmentarbeitsbreite von zumindest einer der anderen Werkzeugabschnitte 3, 4 unterscheiden. Die weiteren Bezugszeichen entsprechen der vorherigen oder nachfolgenden Beschreibung.

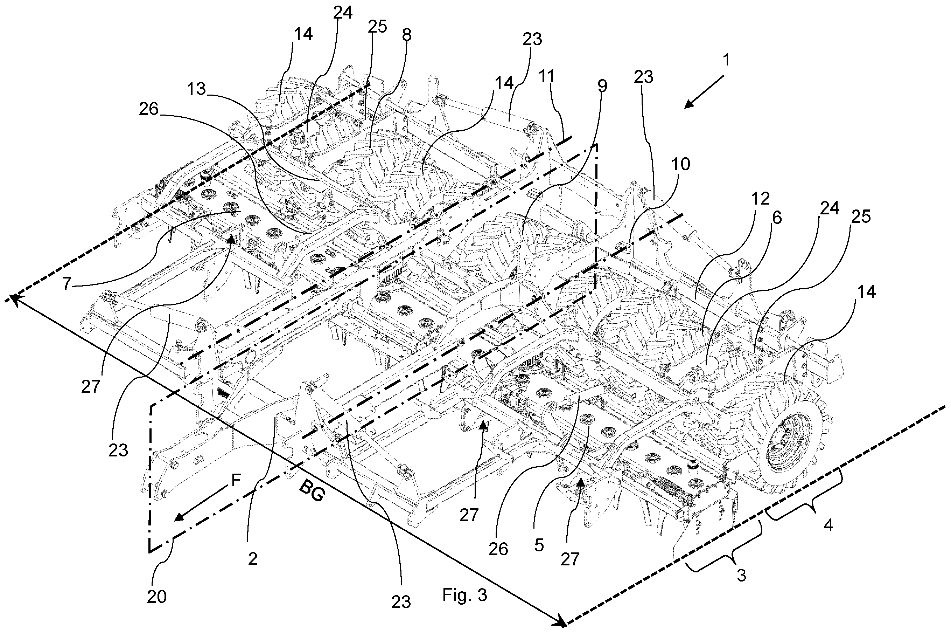

Figur 3 zeigt eine vereinfachte Darstellung der landwirtschaftlichen Arbeitsmaschine 1 in ihrem prinzipiellen Aufbau in Perspektive. Die landwirtschaftliche Arbeitsmaschine 1 besteht aus einem Rahmen und daran angeordneten Werkzeugabschnitten 3, 4. Der zweite Werkzeugabschnitt 4 ist als Fahrwerk ausgebildet, welcher zugleich dem Niederwalzen oder der Rückverfestigung des zuvor durch den ersten Werkzeugabschnitt 3 gelockerten oder zerkleinerten Boden- oder Pflanzenmaterials dient. Der zweite Werkzeugabschnitt 4 ist als Reifenpacker ausgebildet und enthält mehrere, nebeneinander angeordnete Räder 14 mit profilierten Reifen, welche auf einer gemeinsamen Achse oder einzeln mit Radnaben beweglich und auf der Bodenoberfläche abrollbar gelagert sind. Bevorzugt sind zueinander benachbarte Räder 14 auch in Längs- oder Fahrtrichtung F versetzt. Die dadurch erzeugte Relativ-Bewegung der Räder 14 zueinander ermöglicht eine verbesserte Selbstreinigung der Räder 14 und deren Zwischenräume von anhaftendem Boden- und Pflanzenmaterial. Der zweite, als Fahrwerk ausgebildete Werkzeugabschnitt 4, weist vorliegend 3 Segmente 6, 8, 9 auf. Das mittlere Segment 9 ist dem Rahmen 2 zugeordnet, während das in Fahrtrichtung F gesehen linke Segment 6 mittels des Segmentrahmens 12 um die Achse 10 sowie das rechte Segment 8 mittels des Segmentrahmens 13 relativ zum Rahmen 2 schwenkbar angeordnet sind. Die Schwenkbewegung der Segmentrahmen 12, 13 um die Achsen 12 bzw. 13 wird mittels eines oder mehrerer Aktoren 23 ausgeführt, welche zwischen den Segmentrahmen 12, 13 und dem Rahmen 2 sowie beanstandet zu den Achsen 10 bzw. 11 angeordnet sind. Weiterhin und bevorzugt sind die Segmente 6 und 8 jeweils auch relativ zu den Segmentrahmen 12, 13 höhenbeweglich gelagert und mittels weiterer Aktoren 24 betätigbar verbaut. Dabei weist ein Hilfsrahmen 25, welcher das jeweilige Segment 6, 8 trägt, zumindest eine Querachse auf, welche sich quer zur Fahrtrichtung und parallel zu den Radachsen erstreckt. Um diese Querachse kann der Hilfsrahmen 25 relativ zum jeweiligen Segmentrahmen 12, 13 mit einem zugehörigen Aktor 24 oder Energiespeicher auf und ab schwenken. Somit können die einzelnen Segmente 6, 8, 9 des zugehörigen Werkzeugabschnittes 4 relativ zueinander in der Höhe als auch im Anstellwinkel zueinander verschwenken. Dies maximiert die Bodenanpassung auf einem unebenen Acker.

In Fahrtrichtung F vor dem zweiten Werkzeugabschnitt 4 ist der erste Werkzeugabschnitt 3 angeordnet. Dieser besteht aus zwei Segmenten 5, 7, welche im vorliegenden Bespiel als aktiv angetriebene Bodenbearbeitungswerkzeuge in Form einer Kreiselegge ausgebildet sind. Alternative Werkzeuge wie Fräsen oder Rotoren können ebenso verbaut werden wie passive Schneid- oder Zinkenwerkzeuge, welche in einer oder mehreren Reihen und zueinander versetzt innerhalb eines Segmentes angeordnet sind. Das in Fahrtrichtung linke Segment 5 ist relativ zum Segment 6 höhenbeweglich am Segmentrahmen 12 sowie das rechte Segment 7 relativ zum Segment 8 höhenbeweglich am Segmentrahmen 13 angeordnet. Die Höhenbewegung erfolgt bevorzugt über einen jeweiligen Aktor 26 und ein Lenkergestänge 27, welche zwischen dem jeweiligem Segment 5, 7 und dem zugehörigen Segmentrahmen 12, 13 angeordnet sind.

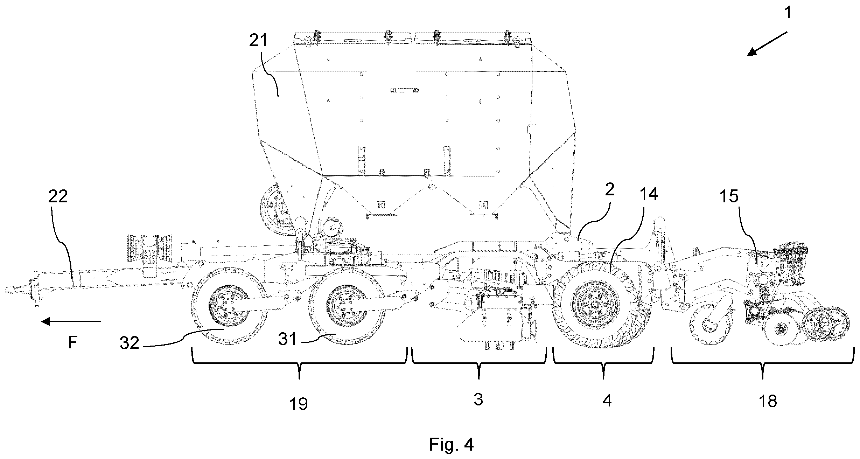

Figur 4 zeigt eine Seitenansicht der landwirtschaftlichen Arbeitsmaschine 1 mit ihren beiden Werkzeugabschnitten 3 und 4 sowie den weiter davor und dahinter angeordneten Werkzeugabschnitten 18 und 19. Oberhalb des Rahmens 2 ist der Tankaufbau 21 angeordnet. Die Segmente der Werkzeugabschnitte 3, 18 und 19 können relativ zur Bodenoberfläche und dem als Fahrwerk ausgebildeten Werkzeugabschnitt 4 ausgehoben werden. Nach dem Aushub kann die Arbeitsmaschine 1 mit Zugfahrzeug ein Wendemanöver auf dem Vorgewende durchführen. Dabei halten bevorzugt alle Räder 14 stets Bodenkontakt. Hier ist von Vorteil, dass die Räder 14 einzeln und zueinander drehbar gelagert sind. So können unterschiedliche Kurvenradien der einzelnen Räder 14 bei Kurvenfahrt kompensiert werden. Dies vermeidet ein Aufstauen von Bodenmaterial insbesondere bei engen Kurvenfahrten auf der Ackeroberfläche, wie es bei einer durchgehenden und gemeinsamen Walzen- oder Reifenachse der Fall wäre. Dargestellt ist in Figur 4 jedoch nicht die Aushubstellung, sondern die Arbeitsposition, in der alle Werkzeugabschnitte 3, 4, 18 und 19 Bodenkontakt halten.

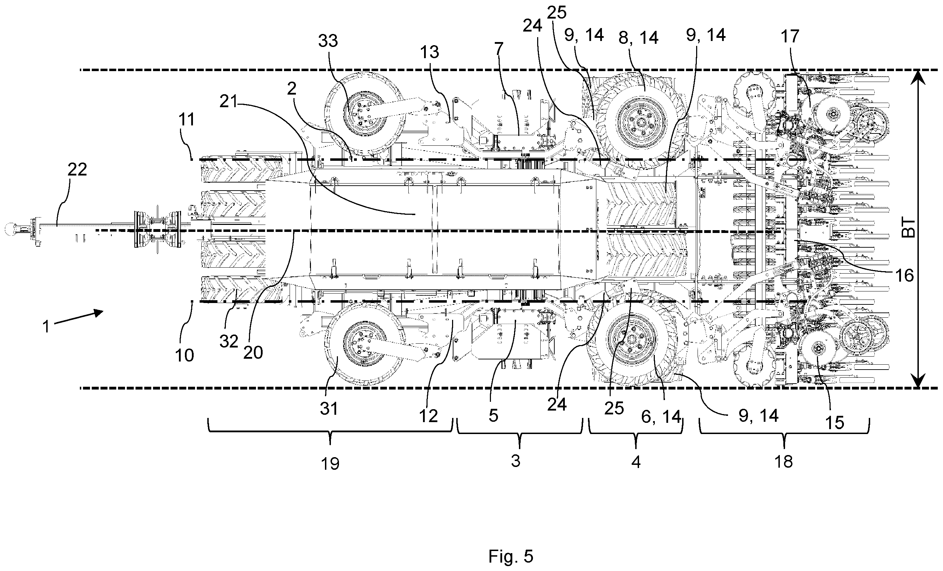

Figur 5 zeigt die Arbeitsmaschine 1 von oben gesehen. Abweichend von Figur 2, in welcher sich die Arbeitsmaschine 1 in Arbeitsstellung über die gesamte Arbeitsbreite BG erstreckt, ist in Figur 5 die Transportstellung mit einer verringerten Transportbreite BT dargestellt, welche sich seitlich zur Fahrtrichtung F erstreckt und die Außenkontur und somit die zulässige Maschinenbreite im Straßenverkehr definiert. Die Räder 14 der beiden äußeren Segmente 6 und 8 sind mittels der Segmentrahmen 12 und 13 um die beiden Schwenkachsen 11 und 12 in eine aufrechte und somit oberhalb der Räder 14 des mittleren Segmentes 9 geklappt. Die Räder 14 des mittleren Segmentes 9 halten weiterhin Bodenkontakt und dienen dem Straßentransport der Arbeitsmaschine 1.

Gemeinsam mit den Segmentrahmen 12 und 13 gelangen auch die Segmente 5, 7 des ersten Werkzeugabschnittes 3 sowie die Segmente 16 und 17 des hinteren Werkzeugabschnittes 18 sowie Segmente 31 und 33 des vorderen Werkzeugabschnittes 19 in eine aufrechte Position. Weiterhin sind diese, sofern sie über eine Höhenverstellung verfügen, zuvor in deren oberste Stellung zu verfahren, damit sie in aufrechter Stellung nicht aus der zulässigen Transportbreite BT herausragen. Das Verschwenken der Segmentrahmen 12, 13 in die aufrechte Stellung und das Einziehen / Hochstellen der jeweils äußeren Segmente 5,6,7,8 sowie 15, 17 und 31, 33 erfolgen bevorzugt über Aktoren, weiter bevorzugt werden diese über eine hydraulische oder elektrohydraulische Folgeschaltung teilautomatisiert betätigt. Wie das Segment 9 mit den Rädern 14 überschreiten auch die Segmente 16 und 32 nicht die Transportbreite BT und brauchen daher nicht in eine aufrechte Stellung geklappt werden. Im Falle einer zweiteiligen Segmentaufteilung eines weiteren Werkzeugabschnittes 18, 19 wäre dies aber der Fall. Die Breite des Tankaufbaus 21 ist derart gewählt, dass die äußeren Segmente 5, 6, 7, 8 sowie 31 und 33 diesen rechts und links in aufrechter Stellung umschließen, jedoch nicht die zulässige Transportbreite BT überschreiten.

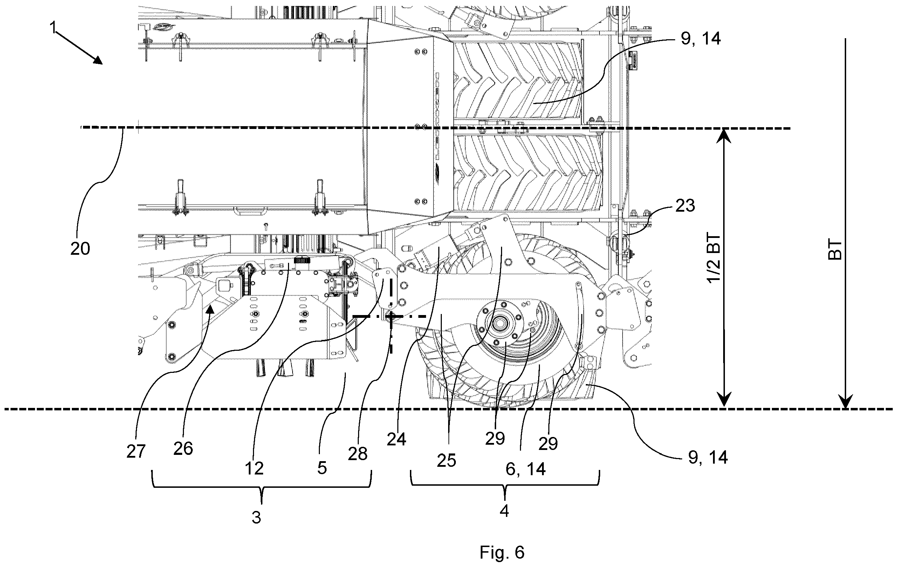

Figur 6 zeigt einen Teilausschnitt der landwirtschaftlichen Arbeitsmaschine 1 aus der Draufsicht in Figur 5.

Dargestellt ist ein Hilfsrahmen 25, welcher um die Achse 28 relativ zum aufrecht geklappten Schwenkrahmen 12 mittels des Aktors 24 eingezogen wurde, damit die Räder 14 des äußeren Segmentes 6 die Transportbreite BT nicht überschreiten. Aus diesem Grund sind die Räder 14 der äußeren Segmente 6 und 8 mit ihren Radnaben den Hilfsrahmen 25 zugeordnet. Das äußere Rad des Segmentes 6 wurde wegelassen, um das Zusammenspiel von Schwenkrahmen 12 und Hilfsrahmen 25 mittels des Aktors 25 besser zu illustrieren. In abgesenkter Arbeitsposition der Segmente 6 und 8, wie in Figur 1-3 dargestellt, ist die Achse 28 parallel zur Bodenoberfläche ausgerichtet. Durch die bewegliche Lagerung der Hilfsrahmen 25 zu den Schwenkrahmen 12 bzw. 13 erfolgt eine verbesserte Anpassung der Räder 14 der äußeren Segmente 6 und 8 an eine ggfs. kupierte oder unebene Bodenoberfläche. Hierzu sind die Aktoren 24 als Hydraulikzylinder ausgebildet und bevorzugt mit einem Druckspeicher verbunden.

Analog erfolgt das Einziehen der Segmente 5 und 7 in aufrechter Stellung sowie eine Aushubbewegung in Arbeitsposition entsprechend Figur 1-3 mittels der Lenkergestänge 27 und weiterer Aktoren 26.

Es folgen 6 Blatt mit Zeichnungen.

### BEZUGSZEICHENLISTE

| | | | |
|---|---|---|---|
| 1 | Landwirtschaftliche Arbeitsmaschine | F | Fahrtrichtung |
| 2 | Rahmen | B5 | Segmentarbeitsbreite |
| 3 | Werkzeugabschnitt | B6 | Segmentarbeitsbreite |
| 4 | Werkzeugabschnitt | B7 | Segmentarbeitsbreite |
| 5 | Segment | B8 | Segmentarbeitsbreite |
| 6 | Segment | B9 | Segmentarbeitsbreite |
| 7 | Segment | BG | Gesamtarbeitsbreite |
| 8 | Segment | BT | Transportbreite |
| 9 | Segment | | |
| 10 | Schwenkachse | | |
| 11 | Schwenkachse | | |
| 12 | Segmentrahmen | | |
| 13 | Segmentrahmen | | |
| 14 | Rad | | |
| 15 | Segment | | |
| 16 | Segment | | |
| 17 | Segment | | |
| 18 | Werkzeugabschnitt | | |
| 19 | Werkzeugabschnitt | | |
| 20 | Mittelebene | | |
| 21 | Tankaufbau | | |
| 22 | Koppeleinrichtung | | |
| 23 | Aktor | | |
| 24 | Aktor | | |
| 25 | Hilfsrahmen | | |
| 26 | Aktor | | |
| 27 | Lenkergestänge | | |
| 28 | Achse | | |
| 29 | Kulisse | | |
| | | | |
| 31 | Segment | | |
| 32 | Segment | | |

## Patentansprüche

1. Landwirtschaftliche Arbeitsmaschine (1), insbesondere zur Bodenbearbeitung und/oder Materialausbringung, mit einem Rahmen (2) und mit einem ersten Werkzeugabschnitt (3) sowie mit einem zweiten Werkzeugabschnitt (4), wobei der erste Werkzeugabschnitt (3) und der zweite Werkzeugabschnitt (4) jeweils schwenkbare Segmente (5, 6, 7, 8) aufweisen, wobei die Segmente (5, 6, 7, 8) schwenkbar um eine jeweils gemeinsame Schwenkachse (10, 11,) am Rahmen (2) angeordnet sind,
**dadurch gekennzeichnet,**
**dass** die Segmente (5, 7) des ersten Werkzeugabschnittes (3) relativ zu den Segmenten (6, 8) des zweiten Werkzeugabschnittes (4) höhenbeweglich angeordnet sind.

2. Landwirtschaftliche Arbeitsmaschine nach Anspruch 1,
**dadurch gekennzeichnet,**
**dass** die Segmente (5, 7) des ersten Werkzeugabschnittes (3) eine zu den Segmenten (6, 8) des zweiten Werkzeugabschnittes (4) verschiedene Segmentarbeitsbreiten (B5, B6, B7, B8) aufweisen.

3. Landwirtschaftliche Arbeitsmaschine nach Anspruch 1 oder 2,
**dadurch gekennzeichnet,**
**dass** die Segmente (5, 7) des ersten Werkzeugabschnittes (3) und die Segmente (6, 8) des zweiten Werkzeugabschnittes (4) eine gemeinsame Gesamtarbeitsbreite (BG) aufweisen

4. Landwirtschaftliche Arbeitsmaschine nach vorstehenden Ansprüchen,
**dadurch gekennzeichnet,**
**dass** der erste Werkzeugabschnitt (3) oder der zweite Werkzeugabschnitt (4) ein weiteres Segment (9) aufweisen, wobei sich die Gesamtzahl der Segmente des ersten Werkzeugabschnittes (3) und des zweiten Werkzeugabschnittes (4) um zumindest ein Segment unterscheiden.

5. Landwirtschaftliche Arbeitsmaschine nach vorstehenden Ansprüchen,
**dadurch gekennzeichnet,**
**dass** zumindest ein Werkzeugabschnitt (3, 4) zueinander höhenverstellbare Segmente (6, 8, 9) aufweist.

6. Landwirtschaftliche Arbeitsmaschine nach vorstehenden Ansprüchen,
**dadurch gekennzeichnet,**
**dass** die Segmente (5, 7) des ersten Werkzeugabschnittes (3) und die Segmente (6, 8) des zweiten Werkzeugabschnittes (4) von einer horizontalen Arbeitsstellung in eine vertikale Transportstellung und umgekehrt verschwenkbar angeordnet sind.

7. Landwirtschaftliche Arbeitsmaschine nach vorstehenden Ansprüchen,
**dadurch gekennzeichnet,**
**dass** sich die Segmentarbeitsbreite (B5, B7) der Segmente (5, 7) zumindest eines Werkzeugabschnittes (3) beidseitig einer Schwenkachse (10, 11) der Segmente erstreckt.

8. Landwirtschaftliche Arbeitsmaschine nach vorstehenden Ansprüchen,
**dadurch gekennzeichnet,**
**dass** die Schwenkachsen (10, 11) der Segmente (5, 6, 7, 8) oberhalb zumindest eines der Werkzeugabschnitte (3, 4) angeordnet sind.

9. Landwirtschaftliche Arbeitsmaschine nach vorstehenden Ansprüchen,
**dadurch gekennzeichnet,**
**dass** einer der Werkzeugabschnitte (4) als Fahrwerk ausgebildet ist, welches sich über die Gesamtarbeitsbreite (BG) der Arbeitsmaschine (1) erstreckt, wobei zumindest ein Segment (9) des Werkzeugabschnittes (4) ein Transportfahrwerk bildet und die weiteren Segmente (6,8) des Werkzeugabschnittes (4) oberhalb des das Transportfahrwerk bildenden Segmentes (9) in Transportposition der Arbeitsmaschine (1) angeordnet oder verschwenkt sind.

10. Landwirtschaftliche Arbeitsmaschine nach vorstehenden Ansprüchen, **dadurch gekennzeichnet,**
**dass** die landwirtschaftliche Arbeitsmaschine (1) einen dritten Werkzeugabschnitt (18, 19) aufweist, welcher zueinander schwenkbare Segmente (15, 16, 17) enthält, wobei die Anzahl der Segmente (15, 16, 17) des dritten Werkzeugabschnittes (18) der Anzahl der Segmente zumindest eines weiteren Werkzeugabschnittes (4) entspricht und von der des anderen Werkzeugabschnittes (3) um zumindest ein Segment abweicht.

11. Landwirtschaftliche Arbeitsmaschine nach vorstehenden Ansprüchen, **dadurch gekennzeichnet,**
**dass** die landwirtschaftliche Arbeitsmaschine (1) einen Tankaufbau (21) zur Materialausbringung aufweist, wobei der Tankaufbau (21) in Transportstellung zumindest teilweise von Segmenten (5, 6, 7, 8) zumindest eines Werkzeugabschnittes (3, 4) umschlossen ist.
